# EUROPEAN PATENT SPECIFICATION

(11) **EP 3 449 544 B1**
(45) Date of publication and mention of the grant of the patent: **18.08.2021**
(21) Application number: 17726699.6
(22) Date of filing: 28.04.2017
(51) Int. Cl.: H02J 3/38

(54) **METHOD AND DEVICE FOR CHARGING AN ENERGY-STORAGE SYSTEM IN A SOLAR PANEL INSTALLATION**
VERFAHREN UND VORRICHTUNG ZUM LADEN EINES ENERGIESPEICHERSYSTEMS IN EINER SOLARZELLENANLAGE
PROCÉDÉ ET DISPOSITIF POUR CHARGER UN SYSTÈME DE STOCKAGE D'ÉNERGIE DANS UNE INSTALLATION DE PANNEAU SOLAIRE

(30) Priority: 29.04.2016 BE 201605309
(43) Date of publication of application: 06.03.2019
(73) Proprietor: Futech, 3980 Tessenderlo (BE)
(72) Inventor: BEN-AL-LAL, Ismaël, 3440 Zoutleeuw (BE)
(74) Representative: IP HILLS NV
(86) International application number: PCT/IB2017/052482
(87) International publication number: WO 2017/187408

(56) References cited:
- WO-A2-2009/140543
- WO-A2-2013/105008
- JP-A- 2013 138 530
- US-A1- 2009 284 240
- US-A1- 2010 208 501
- US-A1- 2011 133 552
- US-A1- 2013 057 196
- US-A1- 2014 210 275
- SALAS V ET AL: "Review of the maximum power point tracking algorithms for stand-alone photovoltaic systems", SOLAR ENERGY MATERIALS AND SOLAR CELLS, ELSEVIER SCIENCE PUBLISHERS, AMSTERDAM, NL, vol. 90, no. 11, 6 July 2006 (2006-07-06), pages 1555-1578, XP028002144, ISSN: 0927-0248, DOI: 10.1016/J.SOLMAT.2005.10.023 [retrieved on 2006-07-06]

## Description

### Technical field

The present invention relates to solar panel installations which are connected to an electricity grid by means of a converter. More specifically, the invention relates to solar panel installations which are not only connected to the electricity grid, but in addition also to an energy-storage system, such as e.g. a battery. An electricity grid may be a local electricity grid which autonomously provides the electricity supply for, for example, a house, a company or even a single user, i.e. off-grid. An electricity grid may also refer to the electricity grid to which several electricity producers are connected and which provides the power supply for a country or region.

### Prior art

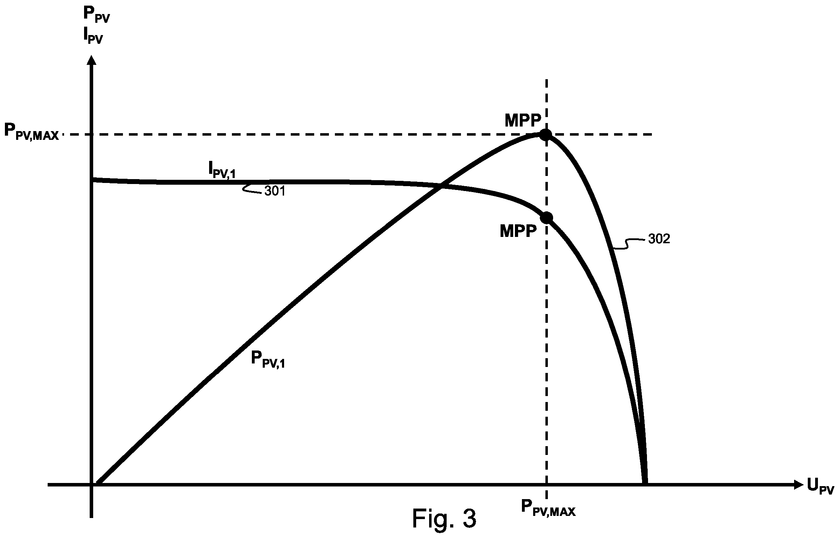

Usually, a power point tracking module, or an MPPT module for short, is provided between the converter and the solar panels. This serves to ensure that the solar panels operate at their optimum operating point. This is illustrated in Fig. 3, where the current generated I_{PV} and the power generated P_{PV} by the solar panels is plotted on the vertical axis against the voltage supplied U_{PV} on the horizontal axis. At a certain temperature and light yield, the power and current will then follow a certain curve I_{PV,1} and P_{PV,1}. The power supplied P_{PV,1} then depends on the load to which the solar panel subjected. The MPPT module then ensures that the load is such that the solar panels operate at their ideal operating point, i.e. that they supply the maximum power. This ideal operating point is also referred to as the Maximum Power Point or the MPP for short.

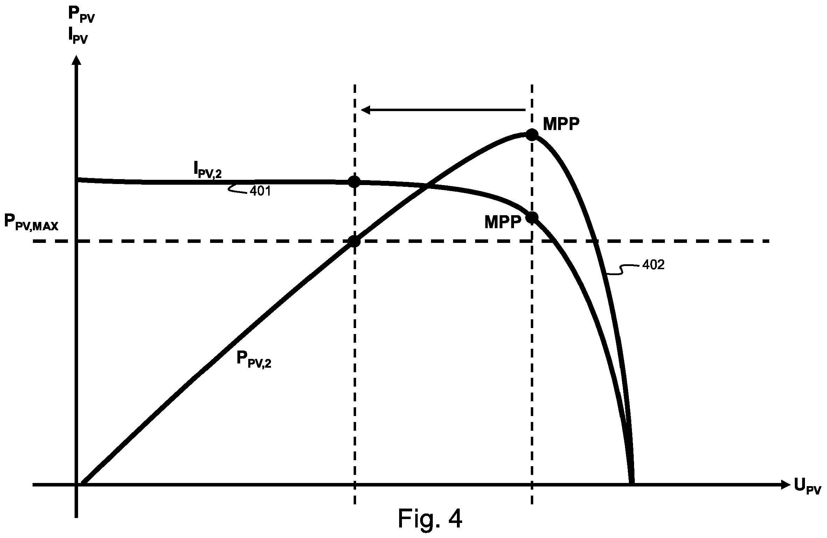

In addition to operating at the MPP, the MPPT module is also responsible for protecting the converter by ensuring that the converter does not have to process more than a certain upper power limit. Such a situation may occur on extremely sunny days and is illustrated in Fig. 4. In this case, the MPP is above the maximum permissible power P_{PV,MAX} for the converter. The MPPT module will then modify the load on the solar panels in such a way that the total power in the converter does not exceed the maximum permissible power P_{PV,MAX}.

As solar panels do not always work at peak capacity, it may be cost efficient to select a converter with a capacity which is lower than this peak capacity. However, the drawback in that case is that the solar panels are not utilized to optimum effect.

US 2014/0210275 A1 discloses a power generation system, apparatus and method to buffer power fluctuations are provided. At least one inverter may be coupled to a photovoltaic power generator. The inverter may be subject to at least one operational constraint. A power-buffering circuitry may be connected between the photovoltaic power generator and the inverter to buffer power generation fluctuations which can occur in power generated by the photovoltaic power generator, and satisfy the operational constraint of the inverter notwithstanding an occurrence of the power generation fluctuations. A controller may be coupled to the power-buffering circuitry and may be responsive to the parameter of the photovoltaic power generator to perform at least one control action regarding the power fluctuations. Control actions may be performed by the controller independently of a control strategy of the inverter.

### Summary of the invention

It is an object of the present invention to overcome the abovementioned drawback and to provide a way to ensure that a solar panel installation always operates at its MPP.

According to a first aspect, the invention relates to the method of claim 1.

Thus, the MPPT module ensures that the solar panels always operate at the maximum power point, MPP, as long as the upper power limit of the converter is not exceeded. When this upper power limit is exceeded, the MPPT module will modify the load in such a way that the solar panels supply less power to the converter. Since solar panels more or less behave like a power source, the output voltage of the solar panels will consequently drop. By measuring the output voltage of the solar panels, it is thus possible to detect if the upper power limit of the converter has been reached.

If the upper power limit is reached, an energy-storage system is coupled in parallel to the solar panels. As a result thereof, a first part of the current generated by the solar panels will flow to the energy-storage system and a second part will flow to the MPPT module and thus the converter. The MPPT will subsequently detect the reduced power and again modify the load, so that the solar panels operate again at the MPP and thus supply the maximum power. The energy-storage system may comprise, for example, an accumulator or battery and optionally a DC-DC converter to adapt the DC voltage of the battery to the measured output voltage of the solar panels.

It is thus an advantage that the converter can have an upper power limit which is below the peak power of the solar panels, while the solar panels can always remain working at maximum power.

It is a further advantage that, if the solar panels supply a power which exceeds the upper power limit, current will always still be supplied to the electricity grid. Some existing systems use a solution which switches between the converter and an energy-storage system. However, this has the drawback that a user who is coupled to the electricity grid has to tap off power from a power supplier while his own solar panels are charging the energy-storage system. This results in additional grid losses and is therefore not energy-efficient.

It is a further advantage that voltage measurement can be used as a means of detection, since this is less complicated and less expensive than a power measurement or a current measurement.

It is a further advantage that no information is required from the converter or from the MPPT for detection or switching. The method can thus easily be employed with existing systems and independently of the type of converter or MPPT module.

The current-voltage curve of a solar panel is not constant, but varies over time. Therefore, the output voltage will also vary over time, since the MPPT module will in each case modify it in order to remain within the MPP. Furthermore, certain types of MPPT modules also experience a voltage fluctuation due to the way in which the MPPT module itself checks if the system is still in the MPP.

The voltage change is viewed over a specific time interval and coupling only takes place if a threshold value is exceeded. Thus, the above phenomena will not be incorrectly detected as attempts by the MPPT module to limit the converter.

Preferably, the threshold value is in the range from 1 to 10 percent of the output voltage and the time interval is in the range from 10 milliseconds to 300 seconds.

More preferably, the threshold value is in the interval of 3 to 10 percent of the output voltage and the time interval is in the interval of 5 seconds to 30 seconds.

According to a further embodiment, the method furthermore comprises:
f) after a certain period, uncoupling the energy-storage system again; and
g) subsequently, repeating steps a), b) and c).

Over the course of time, the yield of the solar panels will fall below the upper power limit again, for example as a result of overclouding or the sun setting. The energy-storage system can then be uncoupled again in order to provide the maximum power of the solar panels to the converter. However, if the maximum power of the solar panels is still above the power limit of the converter, a voltage drop will be detected again and the energy-storage system will be coupled on again.

It is thus an advantage that as much power as possible is always sent to the converter in this way.

According to a second aspect, the invention relates to the device of claim 5.

The abovementioned advantages of the method according to the first aspect are also applicable for this device according to the second aspect.

The device may furthermore be configured as one single apparatus. This makes it possible to connect the device to existing solar panel installations in a simple manner.

### Brief description of the drawings

Fig. 1 shows a solar panel installation with a device according to an embodiment of the present invention; and
Fig. 2 shows the curve of the voltage, current and power over time for various components in the solar panel installation according to Fig. 1; and
Fig. 3 shows the current-voltage characteristic and power-voltage characteristic of a prior-art solar panel; and
Fig. 4 shows the change of the operating point in a prior-art solar panel when an MPPT module limits the power.
Fig. 5 shows the steps performed by the device in the solar panel installation from Fig. 1.

### Description of embodiments

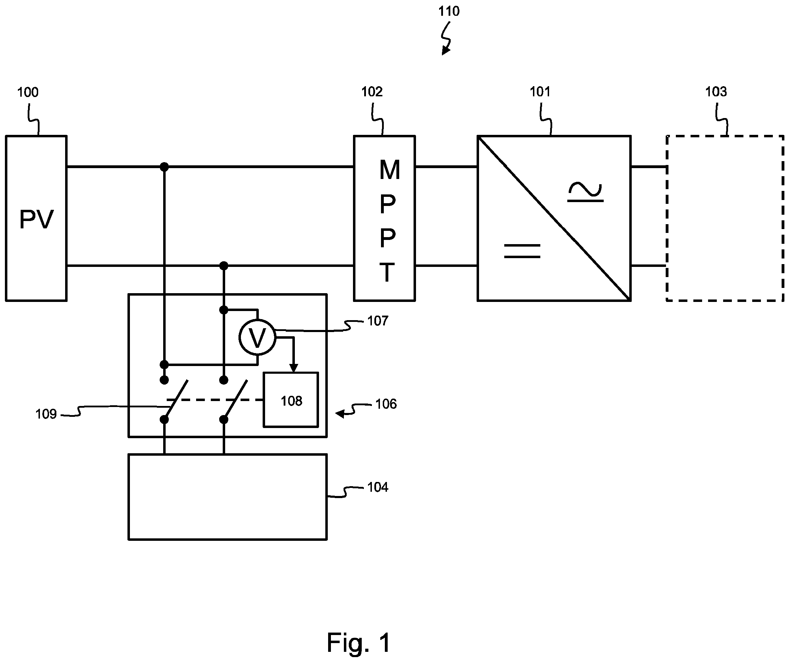

Fig. 1 shows a solar panel installation 110 connected to an electricity grid 103 according to an embodiment of the invention. The solar panel installation 110 comprises one or more solar panels 100. The solar panels 100 supply a direct voltage and direct current which is converted into an AC voltage by the converter 101. A maximum powerpoint tracking module (MPPT) 102 is fitted between the solar panels 100 and the converter 101. This module 102 has two functions.

The first function is to enable the solar panels to operate in their ideal operating range. This is illustrated in Fig. 3, where the current I_{PV} generated by the solar panels 100 is shown as a function of the output voltage U_{PV} at the solar panels, resulting in a current-voltage characteristic 301. Furthermore, the power P_{PV} generated by the solar panels is illustrated as a function of the same output voltage U_{PV}, resulting in the power-voltage characteristic 302. As solar panels have to generate as much power as possible, the MPPT module 102 will modify the load on the solar panels in such a way that the output power is at its maximum. This operating point at which the power is at its maximum is referred to as the maximum power point or MPP for short.

The current-voltage characteristic 301 of solar panels is not constant, but varies over time. Thus, it is greatly dependent on the amount of light which falls on the panels and on the temperature. Therefore, MPPT module 102 will continually adjust the load on the solar panels in order to ensure that the solar panels 100 are in each case able to supply the maximum power.

A second function of the MPPT module 102 is to protect the converter 101 by ensuring that the power flowing to the converter is not greater than the maximum permissible power of the converter, i.e. than the upper power limit of the converter. Fig. 4 shows this by means of a current-voltage characteristic 401 and power-voltage characteristic 402 which are similar to those of Fig. 3. Due to a change in the temperature or the amount of sunlight, the solar panels 100 may at some point start to supply more power than the upper power limit P_{PV,MAX} of the converter 101. In that moment, the MPPT module 102 will modify the load on the solar panels in such a way that the power supplied by the solar panels does not exceed the upper power limit P_{PV,MAX}. Typically, the resistance of the combination comprising MPPT module 102 and converter 101 will be lowered, so that the output voltage of the solar panels 100 drops.

The solar panel installation 110 furthermore comprises an energy-storage system 104 and device 106 to enable coupling of this energy-storage system 104 to the solar panels. The coupling or uncoupling is effected by a switch 109. Switch 109 may be, for example, a single- or two-pole switch which connects or disconnects, respectively, one or both poles between the solar panels 100 and energy-storage system 104. When the switch 109 is closed, the energy-storage system 104 will be connected to the solar panels 100 in parallel with the MPPT module 102.

The energy-storage system may comprise, for example, a battery and optionally a DC-DC converter to adapt the DC voltage of the battery to the DC voltage of the solar panels.

The device 106 furthermore comprises a voltage meter 107 which measures the output voltage of the solar panels 100 and thus also the input voltage of the MPPT module 102. The voltage meter passes the measured voltage on to a calculation unit 108 which also controls the opening and closing of the switch 109 on the basis of the measured voltage.

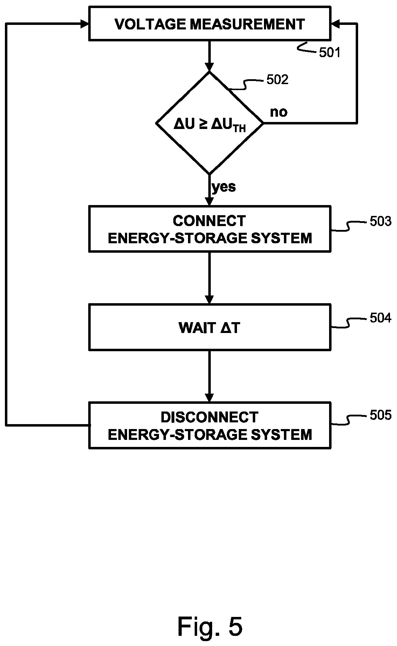

Fig. 5 shows steps performed by the calculation unit 108 for coupling and uncoupling the energy-storage system according to an embodiment of the invention.

At the start of the method, in step 501, the switch 109 is open and the voltage measurements from voltage meter 107 are passed on to the calculation unit 108. The solar panels 100 are also working in the MPP and thus they supply the maximum power to the converter 101.

Then, in step 502, the calculation unit 108 checks if the MPPT module 102 does not limit the power of the converter on the basis of the voltage measurement. This is performed by calculating the voltage change across a certain time interval, i.e. the difference in voltage at the start of the time interval and at the end of the time interval. The calculation unit then checks if this voltage change does not exceed a certain threshold value 206. If the threshold value is not exceeded, the voltage measurement in step 501 and the checking operation 502 are repeated.

However, if the calculation unit detects a voltage drop which is greater than a threshold value, the calculation unit will close the switch 109 in step 503 and thus connect the energy-storage system. As a result thereof, current and thus power now also flows to the energy-storage system and thus less current than before to the converter 101. As a result thereof, the power in the converter drops and the MPPT module 102 will modify the load in such a way that the solar panels 100 again supply the maximum power.

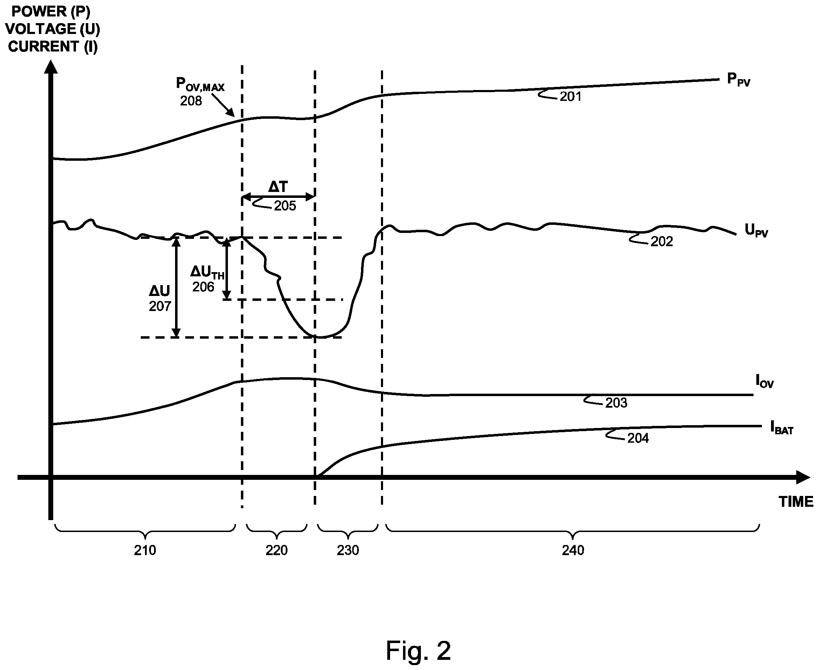

Fig. 2 shows the situation when passing through the steps 501 to 503 using the following curves:
- curve 201 shows the power P_{PV} generated by the solar panels 100 as a function of time;
- curve 202 shows the output voltage U_{PV} of the solar panels as a function of time;
- curve 203 shows the current lov which flows from the solar panels 100 to the MPPT module 102 and thus to the converter 101 as a function of time;
- curve 204 shows the current I_{BAT} which flows from the solar panels 100 to the energy-storage system 104.

During time interval 210, switch 109 is open and the entire power of the solar panels 100 is passed to the converter. As the sunlight on the solar panels 100 increases, the power P_{PV} generated by the solar panels 100 and thus also the absorbed power in the converter increases. During time interval 210, the MPPT module 102 ensures that the solar panels operate in the MPP. However, at a certain point in time, the generated power P_{PV} reaches the maximum permissible power P_{OV,MAX} 208 of the converter 101. Accordingly, the MPPT module 102 limits the power P_{PV} of the solar panels during time interval 220, despite the steadily increasing incidence of light on the solar panels 100. As the solar panels are a power source, this results in a drop of the output voltage U_{PV} of the solar panels 100.

At a certain point in time, i.e. at step 502 and after time interval 220, the calculation unit 108 detects that the voltage drop 207 is greater than the threshold value 206 and the calculation unit couples the energy-storage system 104 to the solar panels 100. At that moment, some of the current, being I_{BAT}, of the solar panels 100 will flow to the energy-storage system and the absorbed power in the converter 101 will decrease further. Thereafter, the MPPT module 102 will adjust the load again, so that the solar panels supply the maximum power again. This can be seen during the time interval 230 where the output voltage increases again to the original level. During the period 240, the yield of the solar panels increases further and the additional power will be absorbed by the energy-storage system.

When the energy-storage system is connected, the solar panels will, after some time, again start to supply less power than the upper power limit of the converter. In order to check this, the control unit may, after the battery has been connected in step 503, wait a certain time in step 504 in order to then disconnect the energy-storage system again in step 505. The method then returns to step 501. If the solar panels were still operating above the upper power limit, the method will reconnect the energy-storage system via step 502 and 503. In the other case, the method will continue to perform steps 501 and 502.

The output voltage of solar panels may also change due to factors other than the MPPT module 102 limiting the upper power limit. Thus, the output voltage will always fluctuate slightly as a result of the operation of the MPPT itself which will always cause the load to fluctuate slightly in order to maintain the ideal operating point. The output voltage will also vary as a result of external factors, such as the amount of light which strikes the solar panels or the temperature of the solar panels.

Therefore, it is important to choose the time interval for measuring the voltage change and the threshold value carefully in order to prevent the energy-storage system from being activated unnecessarily. The time interval and the threshold value may, for example, be determined empirically by monitoring the output voltage for a certain period of time.

Good results can be achieved if the threshold value is selected to be in the range from 1 to 10 percent of the output voltage and the time interval is selected to be in the range of 100 milliseconds to 30 seconds. In most cases, the threshold value may be selected to be in the range from 3 to 10 percent of the output voltage and the time interval in the range from 5 seconds to 30 seconds.

Although the present invention has been illustrated by means of specific embodiments, it will be clear to the person skilled in the art that the invention is not limited to the details of the above illustrative embodiments, and that the present invention may be carried out with various changes and modifications without thereby departing from the area of application of the invention. Therefore, the present embodiments have to be seen in all areas as being illustrative and non-restrictive, and the area of application of the invention is described by the attached claims and not by the above description, and therefore any changes which fall within the meaning and scope of the claims are therefore incorporated herein. In other words, it is assumed that this covers all changes, variations or the like which fall within the area of application of the underlying basic principles and the essential attributes of which are claimed in this patent application. In addition, the reader of this patent application will understand that the terms "comprising" or "comprise" do not exclude other elements or steps, that the term "a(n)" does not exclude the plural and that a single element, such as a computer system, a processor or another integrated unit, can perform the functions of different auxiliary means which are mentioned in the claims. Any references in the claims cannot be interpreted as a limitation of the respective claims. The terms "first", "second", "third", "a", "b", "c" and the like, when used in the description or in the claims, are used to distinguish between similar elements or steps and do not necessarily indicate a sequential or chronological order. In the same way, the terms "top side", "bottom side", "above", "below" and the like are used for the sake of the description and do not necessarily refer to relative positions. It should be understood that these terms are interchangeable under the appropriate circumstances and that embodiments of the invention can function according to the present invention in different sequences or orientations than those described or illustrated above.

## Claims

1. Method for optimizing the yield of one or more solar panels (100) which are coupled to an electricity grid (103) by means of a converter (101) and maximum power point tracking module (102), MPPT module; and wherein the MPPT module (102) is configured to enable the solar panels to supply a maximum power up to a predetermined upper power limit (208) of the converter; and wherein the method comprises the following steps:
a) measuring the output voltage (202) of the solar panels; and
b) based on the measured voltage, detecting if the MPPT module limits the input voltage of the converter to the predetermined upper power limit (208); and
c) subsequently, if the MPPT module limits the input voltage, coupling an energy-storage system (104) in parallel to the one or more solar panels, so that it is charged by the one or more solar panels and so that the MPPT again enables the solar panels to supply the maximum power;
**characterised by** said detecting furthermore comprises:
d) calculating a voltage change (207) of the output voltage (202) during a specific time interval (205); and
e) detecting if the MPPT module limits the input power of the converter to the predetermined upper power limit if the output voltage (202) has dropped during the specific time interval and the voltage change (207) exceeds a certain threshold value (206).

2. Method according to Claim 1, wherein the threshold value is in the range from 1 to 10 percent of the output voltage and the time interval is in the range from 10 milliseconds to 300 seconds.

3. Method according to Claim 1, wherein the threshold value is in the range from 3 to 10 percent of the output voltage and the time interval is in the range from 5 seconds to 30 seconds.

4. Method according to any of the preceding claims, furthermore comprising:
f) after a certain period, uncoupling the energy-storage system again; and
g) subsequently, repeating steps a), b) and c).

5. Device (106) for optimizing the yield of one or more solar panels (100) which are coupled to an electricity grid by means of a converter (101) and maximum power point tracking module (102), MPPT module (102); and wherein the MPPT module (102) is configured to enable the solar panels to supply a maximum power up to an upper power limit (208) of the converter; and wherein the apparatus comprises a voltage meter (107) for measuring the output voltage (202) of the solar panels; and the apparatus comprises a switch (109) for coupling an energy-storage system (104) in parallel to the one or more solar panels, so that the energy-storage system (104) is charged by the one or more solar panels; and wherein the apparatus contains a control unit (108) which is configured for the following:
a) based on the measured voltage (202), detecting if the MPPT module limits the input voltage of the converter to the upper power limit (208); and
b) subsequently, if the MPPT module limits the input voltage, coupling the energy-storage system (104) to the one or more solar panels with the switch (109), so that the energy-storage system is charged by the one or more solar panels and so that the MPPT again enables the solar panels to supply the maximum power;
**characterised by** the detecting furthermore comprises:
d) calculating a voltage change (207) of the output voltage (202) during a specific time interval (205); and
e) detecting if the MPPT module limits the input power of the converter to the predetermined upper power limit if the output voltage (202) has dropped during the specific time interval and the voltage change (207) exceeds a certain threshold value (206).

## Patentansprüche

1. Verfahren zum Optimieren des Ertrags eines oder mehrerer Solarpaneele (100), die mittels eines Wandlers (101) und eines Maximum-Power-Point-Tracking-Moduls (102), MPPT-Moduls, an ein Stromnetz (103) gekoppelt sind; und wobei das MPPT-Modul (102) konfiguriert ist, um den Solarpaneelen zu ermöglichen, eine maximale Leistung bis zu einer vorbestimmten oberen Leistungsgrenze (208) des Wandlers zu liefern; und wobei das Verfahren die folgenden Schritte umfasst:
a) Messen der Ausgangsspannung (202) der Solarpaneele; und
b) basierend auf der gemessenen Spannung Erfassen, ob das MPPT-Modul die Eingangsspannung des Wandlers auf die vorbestimmte obere Leistungsgrenze (208) begrenzt; und
c) anschließend, wenn das MPPT-Modul die Eingangsspannung begrenzt, Koppeln eines Energiespeichersystems (104) parallel zu dem einen oder den mehreren Solarpaneelen, sodass es von dem einen oder den mehreren Solarpaneelen geladen wird und sodass das MPPT den Solarpaneelen wieder ermöglicht, die maximale Leistung zu liefern;
**dadurch gekennzeichnet, dass** das Erfassen ferner Folgendes umfasst:
d) Berechnen einer Spannungsänderung (207) der Ausgangsspannung (202) während eines spezifischen Zeitintervalls (205); und
e) Erfassen, ob das MPPT-Modul die Eingangsleistung des Wandlers auf die vorbestimmte obere Leistungsgrenze begrenzt, wenn die Ausgangsspannung (202) während des spezifischen Zeitintervalls abgefallen ist und die Spannungsänderung (207) einen bestimmten Schwellenwert (206) überschreitet.

2. Verfahren nach Anspruch 1, wobei der Schwellenwert in dem Bereich von 1 bis 10 Prozent der Ausgangsspannung ist und das Zeitintervall in dem Bereich von 10 Millisekunden bis 300 Sekunden ist.

3. Verfahren nach Anspruch 1, wobei der Schwellenwert in dem Bereich von 3 bis 10 Prozent der Ausgangsspannung ist und das Zeitintervall in dem Bereich von 5 Sekunden bis 30 Sekunden ist.

4. Verfahren nach einem der vorhergehenden Ansprüche, ferner umfassend:
f) nach einer bestimmten Zeit, erneutes Entkoppeln des Energiespeichersystems; und
g) anschließend Wiederholen der Schritte a), b) und c).

5. Einrichtung (106) zum Optimieren des Ertrags eines oder mehrerer Solarpaneele (100), die mittels eines Wandlers (101) und eines Maximum-Power-Point-Tracking-Moduls (102), MPPT-Moduls (102), an ein Stromnetz gekoppelt sind; und wobei das MPPT-Modul (102) konfiguriert ist, um den Solarpaneelen zu ermöglichen, eine maximale Leistung bis zu einer oberen Leistungsgrenze (208) des Wandlers zu liefern; und wobei die Vorrichtung einen Spannungsmesser (107) umfasst, um die Ausgangsspannung (202) der Solarpaneele zu messen; und die Vorrichtung einen Schalter (109) umfasst, um ein Energiespeichersystem (104) parallel zu dem einen oder den mehreren Solarpaneelen zu koppeln, sodass das Energiespeichersystem (104) durch das eine oder die mehreren Solarpaneele geladen wird; und wobei die Vorrichtung eine Steuereinheit (108) enthält, die für Folgendes konfiguriert ist:
a) basierend auf der gemessenen Spannung (202) Erfassen, ob das MPPT-Modul die Eingangsspannung des Wandlers auf die obere Leistungsgrenze (208) begrenzt; und
b) anschließend, wenn das MPPT-Modul die Eingangsspannung begrenzt, Koppeln des Energiespeichersystems (104) an das eine oder die mehreren Solarpaneele mit dem Schalter (109), sodass das Energiespeichersystem durch das eine oder die mehreren Solarpaneele geladen wird und sodass das MPPT den Solarpaneelen wieder ermöglicht, die maximale Leistung zu liefern;
**dadurch gekennzeichnet, dass** das Erfassen ferner Folgendes umfasst:
d) Berechnen einer Spannungsänderung (207) der Ausgangsspannung (202) während eines spezifischen Zeitintervalls (205); und
e) Erfassen, ob das MPPT-Modul die Eingangsleistung des Wandlers auf die vorbestimmte obere Leistungsgrenze begrenzt, wenn die Ausgangsspannung (202) während des spezifischen Zeitintervalls abgefallen ist und die Spannungsänderung (207) einen bestimmten Schwellenwert (206) überschreitet.

## Revendications

1. Procédé permettant l'optimisation du rendement d'un ou plusieurs panneaux solaires (100) qui sont couplés à un réseau électrique (103) au moyen d'un convertisseur (101) et un module de suivi de point de puissance maximale (102), module MPPT ; et ledit module MPPT (102) étant conçu pour permettre aux panneaux solaires de fournir une puissance maximale jusqu'à une limite de puissance supérieure prédéfinie (208) du convertisseur ; et ledit procédé comprenant les étapes suivantes :
a) la mesure de la tension de sortie (202) des panneaux solaires ; et
b) sur la base de la tension mesurée, la détection pour savoir si le module MPPT limite la tension d'entrée du convertisseur à la limite de puissance supérieure prédéfinie (208) ; et
c) ensuite, si le module MPPT limite la tension d'entrée, le couplage d'un système de stockage d'énergie (104) en parallèle au ou aux panneaux solaires, afin qu'il soit chargé par le ou les panneaux solaires et afin que le MPPT active de nouveau les panneaux solaires pour fournir la puissance maximale ;
**caractérisé par** ladite détection
comprenant en outre :
d) le calcul d'un changement de tension (207) de la tension de sortie (202) durant un intervalle de temps spécifique (205) ; et
e) la détection pour savoir si le module MPPT limite la puissance d'entrée du convertisseur à la limite de puissance supérieure prédéfinie si la tension de sortie (202) a chuté durant l'intervalle de temps spécifique et le changement de tension (207) dépasse une certaine valeur seuil (206).

2. Procédé selon la revendication 1, ladite valeur seuil étant comprise dans la plage allant de 1 à 10 pour cent de la tension de sortie et ledit intervalle de temps étant compris dans la plage allant de 10 millisecondes à 300 secondes.

3. Procédé selon la revendication 1, ladite valeur seuil étant comprise dans la plage allant de 3 à 10 pour cent de la tension de sortie et ledit intervalle de temps étant compris dans la plage allant de 5 secondes à 30 secondes.

4. Procédé selon l'une quelconque des revendications précédentes, comprenant en outre :
f) après une certaine période, le découplage de nouveau du système de stockage d'énergie ; et
g) ensuite, la répétition des étapes a), b) et c).

5. Dispositif (106) destiné à optimiser le rendement d'un ou plusieurs panneaux solaires (100) qui sont couplés à un réseau électrique au moyen d'un convertisseur (101) et un module de suivi de point de puissance maximale (102), module MPPT (102) ; et ledit module MPPT (102) étant conçu pour permettre aux panneaux solaires de fournir une puissance maximale jusqu'à une limite de puissance supérieure (208) du convertisseur ; et ledit appareil comprenant un voltmètre (107) destiné à mesurer la tension de sortie (202) des panneaux solaires ; et ledit appareil comprenant un commutateur (109) destiné à coupler un système de stockage d'énergie (104) en parallèle au ou aux panneaux solaires, afin que le système de stockage d'énergie (104) soit chargé par le ou les panneaux solaires ; et ledit appareil contenant une unité de commande (108) qui est conçue pour les suivants :
a) sur la base de la tension mesurée (202), la détection pour savoir si le module MPPT limite la tension d'entrée du convertisseur à la limite de puissance supérieure (208) ; et
b) ensuite, si le module MPPT limite la tension d'entrée, le couplage du système de stockage d'énergie (104) au ou aux panneaux solaires avec le commutateur (109), afin que le système de stockage d'énergie soit chargé par le ou les panneaux solaires et afin que le MPPT permette de nouveau aux panneaux solaires de fournir la puissance maximale ; **caractérisé par**
la détection comprenant en outre :
d) le calcul d'un changement de tension (207) de la tension de sortie (202) durant un intervalle de temps spécifique (205) ; et
e) la détection pour savoir si le module MPPT limite la puissance d'entrée du convertisseur à la limite de puissance supérieure prédéfinie si la tension de sortie (202) a chuté durant l'intervalle de temps spécifique et le changement de tension (207) dépasse une certaine valeur seuil (206).
